# EUROPEAN PATENT SPECIFICATION

(11) **EP 2 312 926 B1**
(45) Date of publication and mention of the grant of the patent: **11.09.2013**
(21) Application number: 09785763.5
(22) Date of filing: 24.07.2009
(51) Int. Cl.: A01B 35/16, A01B 21/00, A01B 21/02

(54) **ROLLING HOE, PARTICULARLY ROTARY CULTIVATOR, ESPECIALLY FOR SOIL SURFACE CULTIVATION WORKS**
DREHHACKE, INSBESONDERE KREISELKULTIVATOR, INSBESONDERE ZUR BEARBEITUNG VON BODENFLÄCHEN
HOUE ROTATIVE, NOTAMMENT CULTIVATEUR ROTATIF, SPÉCIALEMENT POUR TRAVAUX DE CULTURE DE LA SURFACE DU SOL

(30) Priority: 30.07.2008 HU 0800477
(43) Date of publication of application: 27.04.2011
(73) Proprietor: Horváth, Benedek, 6000 Kecskemét (HU)
(72) Inventor: Horváth, Benedek, 6000 Kecskemét (HU)
(74) Representative: Markó, József
(86) International application number: PCT/HU2009/000062
(87) International publication number: WO 2010/013076

(56) References cited:
- DE-C- 976 328
- FR-A- 2 623 049
- NL-C- 94 383
- US-A- 2 393 190
- US-A- 3 131 774
- US-A- 4 991 660

## Description

### FIELD OF THE INVENTION

The present invention relates to a rolling hoe, particularly a rotary cultivator, which is primarily a soil cultivating rotary machine to be applied especially for soil surface cultivation works, e.g. for loosening and/or mixing the soil, breaking up of clods, etc.

### PRIOR ART

Different rolling hoes are known, e.g. from the Applicant earlier Hungarian Pat No's HU-192,002 and HU-202,702. A common characteristic of these solutions is that they are only suitable for cultivating the soil at a specific depth, and this cultivation depth is determined by the design of the given rolling hoe. The difficulty is caused by the fact that the hoe must rotate, on the one hand, and it must cultivate the widest possible soil band.

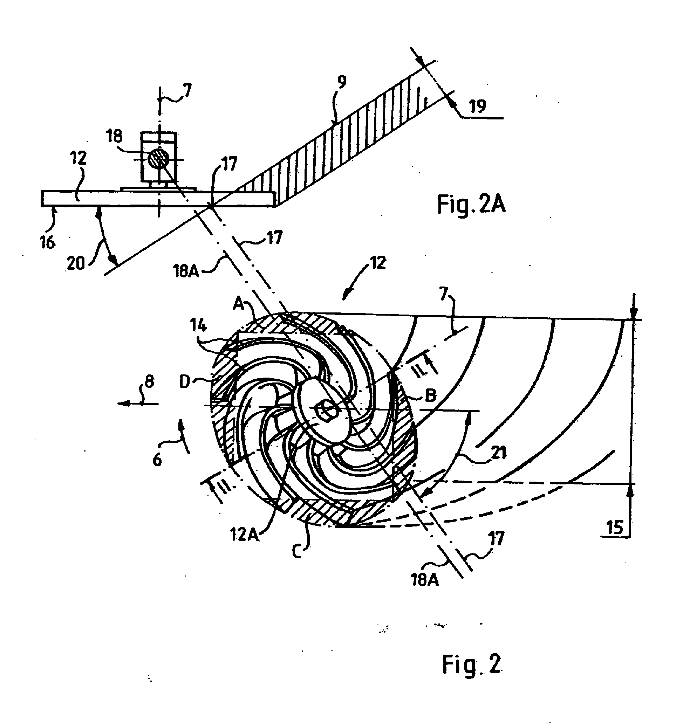

In case of the rolling hoe according to the cited two patents above, the angle of the hoe body with the soil is changed by turning it around an adjustment shaft perpendicutar to the direction of advance. This shaft of turning or adjustment is indicated by reference number 5 in Figure 2 of the drawing in the HU-192,002. Here, the adjustment of angles is enabled by the change of positions of screwed buffers on a spring rod 6. The method of angle adjustment is of a similar basic principle in the case of HU-202,702 as well.

In our practical experience, a deficiency of the above depth adjustment method is that in case of reducing the angle of the rotation plane of the hoe wheel with the soil, it is inevitable that the width of the soil band cultivated by the hoe wheel is also reduced. On the other hand, in case of increasing the angle above, the rotation intensity of the rolling hoe is reduced, which is particularly disadvantageous, e.g. due to a decrease in cultivation efficiency and the inefficiency of the self-cleaning of the hoe wheel.

The spread of rolling hoes is presently hindered to a great extent by the fact that they are suitable for a single cultivation depth only. However, agro-technical necessities - particularly if rolling hoes are applied as sowing seed bed machines - would require that the optimum cultivation depth be in concordance with the thickness of the surface soil layer currently suitable for cultivation. However, this complex requirement cannot be met by using traditional rolling hoes for the reasons mentioned, because in case of the traditional angle adjustment of rolling hoes either uncultivated, weeded soil bands remain, or the rolling hoe does not perform appropriate cultivating work because it does not roll properly.

A rolling hoe in accordance with the preamble of claim 1 is known from DE-C-976 328.

### SUMMARY OF THE INVENTION

The aim of the present invention is to eliminate the deficiencies of the known solutions, namely to provide an improved rolling hoe wherein neither the cultivation width of the rolling hoe, nor the intensity of the hoe rotation is changed in case of altering the angle of the rotation plane of the rolling hoe with the soil.

The above object was completely solved by the present invention, that is, a rolling hoe according to Claim 1. Further improvements are disclosed in dependent claims.

The essence of the invention lies in an original recognition that the task envisaged can be solved if - by completely breaking away from the traditional depth adjustment method - the rolling hoe is turned around an adjustment shaft parallel with the line of intersection of the rotation plane of the rolling hoe and the plane of the soil surface in order to adjust the cultivation depth. And the surprising effect of this measure/feature according to the invention is that when adjusting the depth, neither the cultivation width of the rolling hoe, nor the arm of the force rotating the rolling hoe are changed, absolutely to the contrary of all state-of-the-art solutions.

So, a surprising surplus effect of the invention can be specified in the fact that if the proposed rolling hoe is applied, both thin and tick surface soil layers - suit able for cultivation - can be cultivated in good working quality, in accordance with the current predetermined agro-technical requirements, bringing considerable agronomic and economic benefits to users.

As to the complex agronomic criteria, it should be noted that the general problem in spring seed bed production is the excessively wet soil layer below the surface. It is obvious that a wet soil cannot be broken into smaller pieces by mechanical impacts because it is too soft and it is lying together. A further problem is that a watery soil layer brought to the surface decreases the water stock of the soil, thereby spoiling the chances of sprouting for the seeds sown. Substantially, the problem is the same with the cultivation tools of plant tending machinery as well; at such times, wet soil must not be brought to the surface, either. Actually, too deep soil cultivation entails too large water toss, which deteriorates the chances of survival of sprouted cultivated plants. On the other hand, in autumn sowing seed bed production, it would be desirable to make rolling hoes go deep because at such times the moisture content of the soil is low and therefore the soil ploughing is cloddish, or there are large clods in the loosened soil layer which should be crushed, In the autumn; after e.g. maize is harvested, there is no time to wait for the plough-land to be "deposited", sowing must be promptly completed.

All these soil operations outlined can be performed for the first time in good quality by applying the rolling hoe according to the present invention. So, the main advantage of the rolling hoe of adjustable working depth according to the invention is that it can universally perform any steps or components of the complex system of requirements mentioned above. Moreover, this rolling hoe can produce good quality seed beds even out of an excessively thin soil layer (suitable for cultivation) in the spring, which has been inconceivable with traditional rolling hoes so far.

Our experimental results show that further areas of applying the rolling hoe according to the invention may include ridge formation, ridge renovation, or ridge tending. In these kinds of soil works, it is also of great importance to be able to adjust cultivation depth. Within the meaning of the invention, the same rolling hoe wheel (rotor) can be applied both for ridge formation and ridge tending if the rolling hoe is turned around an adjustment shaft parallel with the line of intersection of the ridge surface and the plane of hoe rotation in order to adjust the working depth, by which the scope of utilization of the rolling hoe according to the invention can be further broadened.

### BRIEF DESCRIPTION OF THE DRAWINGS

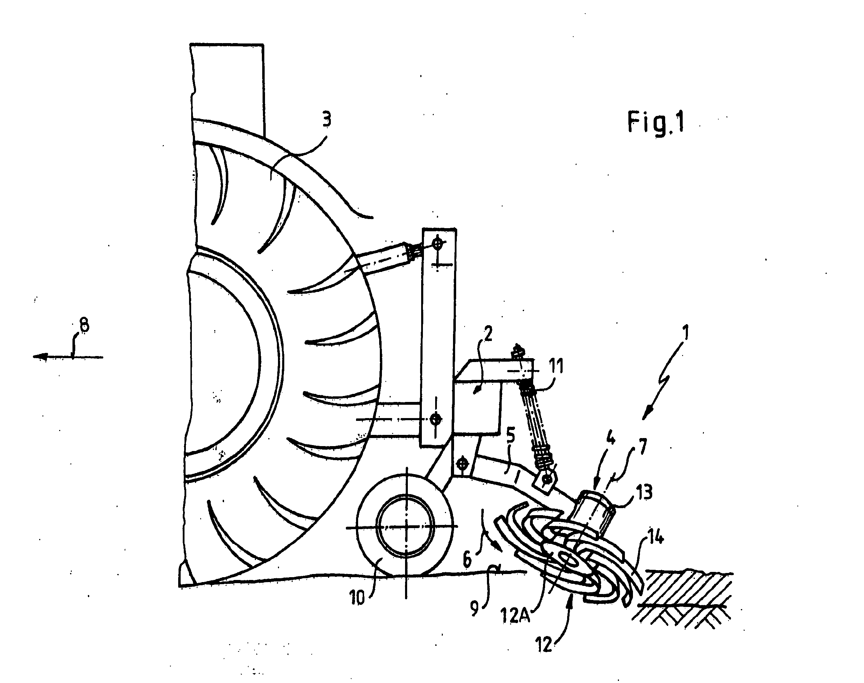

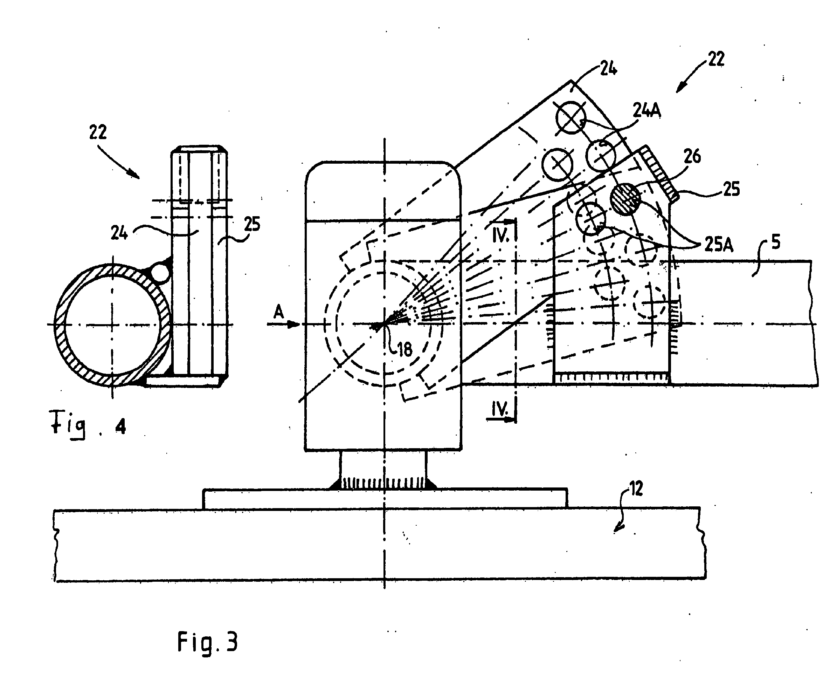

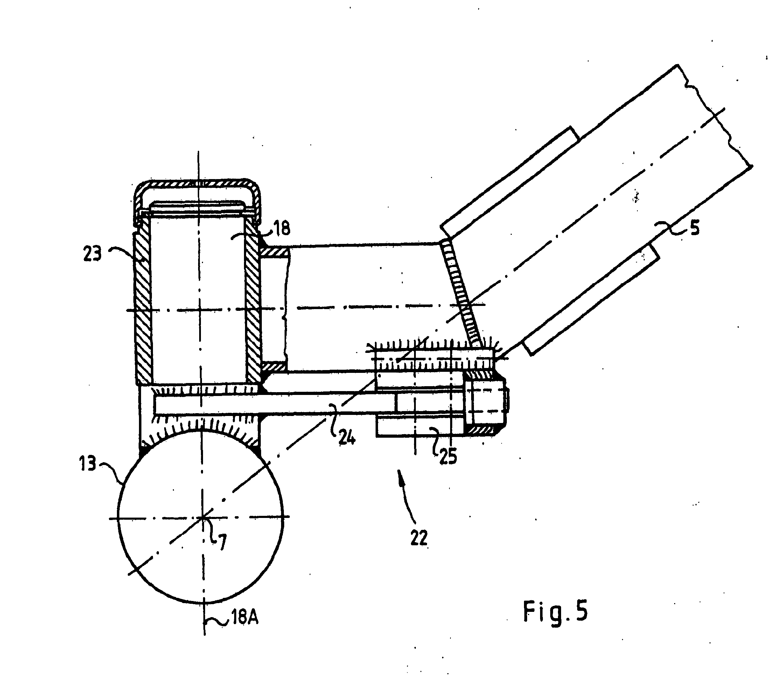

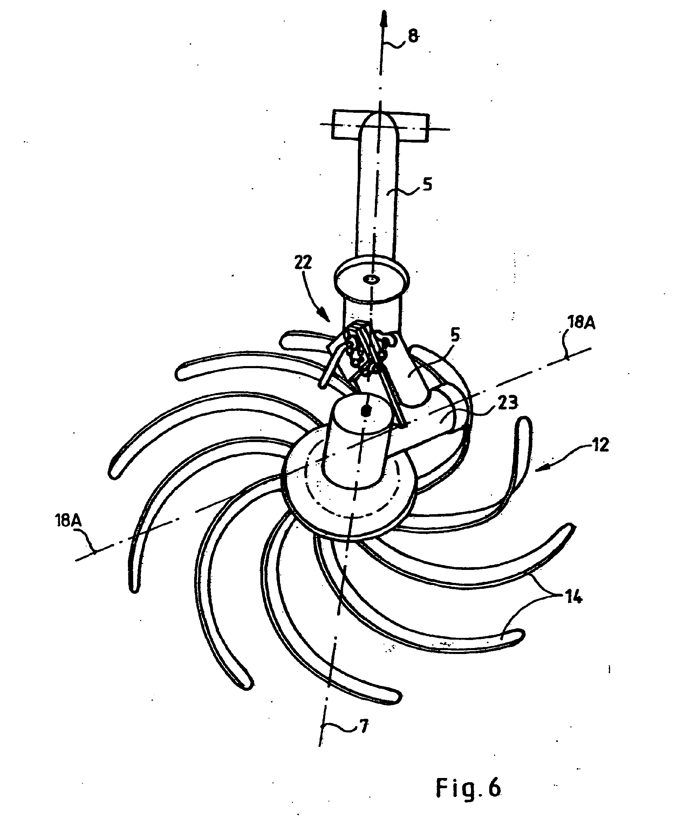

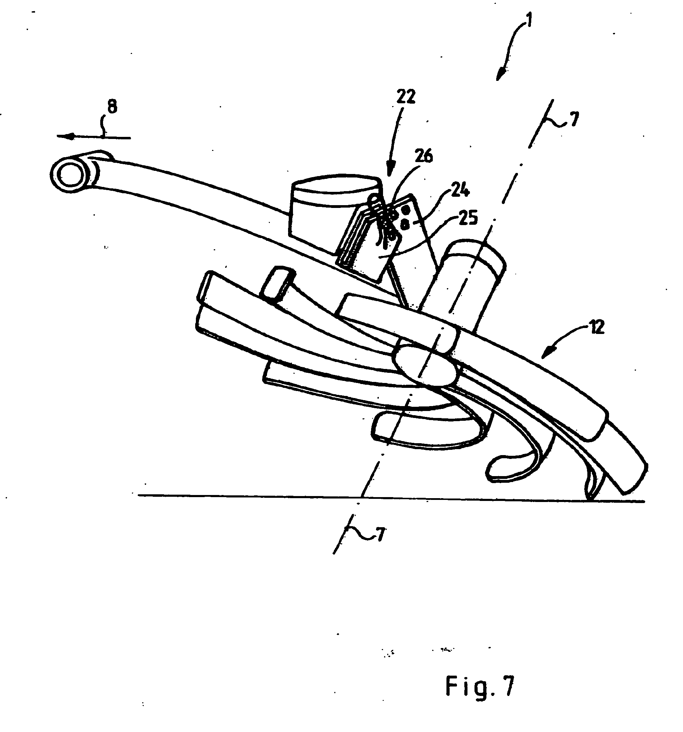

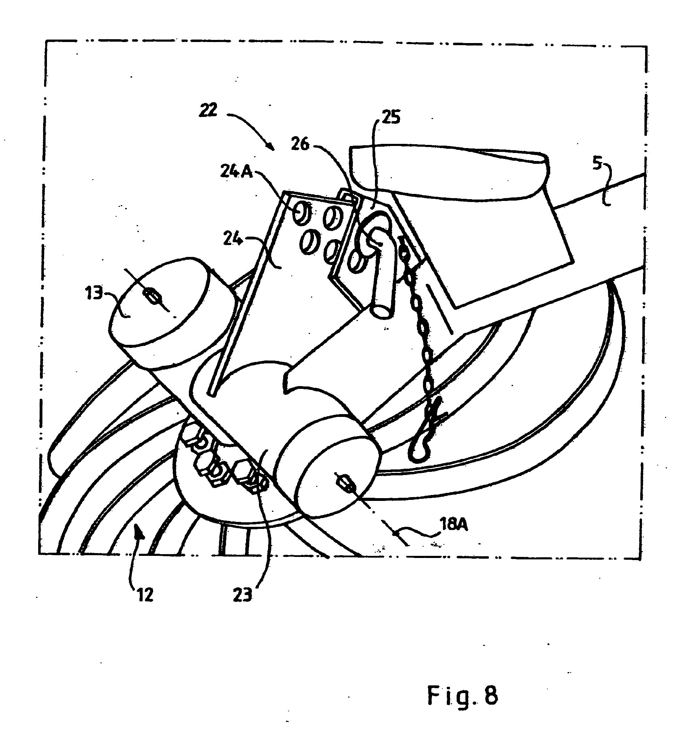

The invention is presented in more detail by the aid a preferred embodiment, with reference to the drawings enclosed, wherein:
■ Figure 1 illustrates a side view of an embodiment of the rolling hoe according to the invention in working state, suspended a power machine;
■ Figure 2 is a schematic view, presenting the arrangement and way of operation of the hoe body according to Figure 1;
■ Figure 2A is a cross-section along line II-II in Figure 2;
■ Figures 3-5 present a detail of the solution according to Figure 1, namely an embodiment of the angle adjustment mechanism, wherein Figure 3 is a side view, partly cut off; Figure 4 is a cross-section along line IV-IV in Figure 3; and Figure 5 shows another view of the detail according to Figure 3, partly cut off ;
■ Figures 6-8 illustrate the rolling hoe according to Figure 1 independently, wherein Fig. 6 shows a top view, Fig. 7 is a lateral perspective view, and Fig. 8 shows another lateral perspective view of a part of Fig 7, on a larger scale.

### DETAILED DESCRIPTION OF A PREFERRED EMBODIMENT

As can be seen in Figure 1, a rolling hoe 1 according to the invention is connected, that is, suspended in a known manner through a supporting structure 2 to a power machine 3 or another towed structure. In the present case, the rolling hoe 1 comprising a single hoe body 4 which is hinged to the supporting structure 2 through a suspension arm 5. The direction of rotation of the hoe body 4 is indicated by an arrow 6, and its rotation axis by a reference number 7. The direction of advance of the suspended rolling hoe 1 - as well as the power machine 3 - is designated by an arrow 8.

The pre-adjusted position of the hoe body 4 to a soil surface 9 is constant in the course of a soil cultivation method. In order to follow bumps or unevenness of the soil to be cultivated, a depth restricting wheel 10 was applied in the illustrated embodiment In case of getting stuck, e.g. larger clods, structural damages to the rolling hoe 1 can be avoided by a spring mechanism 11, and by tilting the rolling hoe 1 upwards (Fig. 1).

In the present case, the hoe body 4 has a single hoe wheel (rotor) 12 comprising a central hub 12A which is installed in a house 13 being equipped with bearings (not illustrated). The hoe wheel 12 can freely be rotated in the direction of the arrow 6 already mentioned above around said rotation axis 7. In the present case, the cylindrical house 13 is fixed to the suspension arm 5. The hoe wheel 12 is equipped with radial teeth 14, fixed to the hub 12A in a manner to be favorably loosened. The teeth 14 are arranged in equal distances from each other along the perimeter of the hub 12A, preferably they are arranged in a common plane, and in the present case they are bent backwards, in the opposite direction to the direction of rotation 6 of the hoe wheel 12, being generated this rotation through its interaction with the soil.

The cross-sections of the arcually bent teeth 14 are favorably isosceles triangles or are trapezoidal with two edges. As regards the different geometrical design of the teeth 14, let us refer to our earlier Pat. No. HU-202,702.

In the theoretical outline of Figure 2, a perspective view of the hoe wheel 12 is illustrated during work, presenting its special principle of depth adjustment according to the invention. According to the essence of the present invention, a cultivation/working width 15 of the rolling hoe 1 remains surprisingly unchanged, if the hoe body 4 of the rolling hoe 1 is turned around an adjustment axle 18, which is arranged parallel with a line of intersection 17 of a plane of rotation 16 of the hoe wheel 12 and the soil surface 9, in order to increase or to reduce a required cultivation depth 19.

As can be seen in Figure 2A, if a first angle 20 between the plane of rotation 16 of the hoe wheel 12 and the soil surface 9 is increased, then the cultivation depth 19 increases, whereas if the first angle 20 is decreased, the cultivation depth 19 will decrease accordingly. However, it is a substantial circumstance that in the course of above depth adjustment, a second angle 21 between the line of intersection 17 of the plane of rotation 16 and the soil surface 9, as well as the direction of the arrow 8 of advance is of a constant value, that is, unchanged all throughout. The hoe wheel (rotor) 12 of the rolling hoe 1, in its tilted position both backwards and laterally, rotates during cultivation around its rotation axis 7 as a result of the forced connection with the soil.

The simple embodiment of an angle adjustment mechanism 22 of the rolling hoe 1 is shown on the basis of Figures 3-5. In the present case, an adjustment hub 23 embedding rotatably the adjustment axle 18 according to the invention - parallel with the line of intersection 17 of the soil surface 9 and the plane of rotation 16 of the hoe wheel 12 constitutes a single structural unit with the suspension arm 5 (Fig. 3). On the other hand, the adjustment axle 18 associated with an angle adjustment mechanism 22 constitutes preferably also a single structural unit with the house 13 embedding the rotatable hoe wheel 12 (see Fig. 5).

In the illustrated embodiment of the angle adjustment mechanism 22, an adjustment arm 24 is provided which has a set of boreholes 24A, and fixed to the adjustment axle 18 e.g. by welding. On the other hand, an adjustment fork 25 is provided which also has a set of boreholes 25A and fixed to the suspension arm 5 (see Figures 3, 5 and 6). The boreholes 24A and 25A of the adjustment arm 24 and of the adjustment fork 25, respectively, collaborate with each other in the sense that in a certain relative angle positions, at least one of their respective boreholes 24A and 25A coincide with each other, and the angle position actually set can be fixed by at lest one locking element pushed through them, e.g. by a pit least one locking pin 26.

So the cultivation depth 19 of the rolling hoe 1 can be simply adjusted using the above angle adjustment mechanism 22 by turning the adjustment axle 18 to the degree required in the adjustment hub 23, and then - in accordance with the required cultivation depth 19 the rolling hoe 1 is locked in the pre-selected angle position by the pin 26 pushing through the boreholes 24A and 25A - actually flush with each other - of the adjustment fork 25 and the adjustment arm 24, respectively.

In operation, that is, during the soil cultivation work, the rolling hoe 1 suspended to the power machine 3 progresses in the direction indicated by the arrow 8. In a working position, the rotor, that is, the hoe wheel 12 of the rolling hoe 1 is arranged by tilting both backwards and laterally in such a manner that its plane of rotation 16 and the soil surface 9 to be cultivated enclose the first angle 20 between 5°- 70° preferably about 36°, and the line of intersection 17 of its plane of rotation 16 with the plane of the soil surface 9 and the direction of advance of the rolling hoe 1 (indicated by the arrow 8) enclose the second angle 21 of 5° - 80°.

It can be clearly observed in Figures 2 and 2A how the plane of rotation 16 of the hoe wheel 12 and the plane of the soil surface 9 intersect each other in the line of intersection 17. During towing the rolling hoe 1 by the power machine 3, the hoe wheel 6 starts to rotate due to the fact that a part of the tilting hoe wheel 6 is in forced connection with the soil; consequently the teeth 14 of the hoe wheel 6 slash through the soil. On the other had, the tooth 14, actually crossing the direction of advance, starts to move on the soil because - as mentioned above- the line of intersection 17 and the direction of advance (indicated by the arrow 8) enclose the second angle 21 different from 90°, suitably between 5° and 80°. So the hoe body 4 is capable to perform its special agro-technical functions by the relative spatial movement of the teeth 14.

Figure 2, also showing an outline of motion relations, presents the work of the teeth 14 of the hoe wheel 12. According to our experimental results, the hoe wheel 12 rolls down the soil along the external perimeter formed by the tips of the teeth 14 of the hoe wheel 12. So the temporary (momentary) centre of motion of the hoe wheel 12 is along the external circle followed by the tips of the teeth 14, at the point where the teeth 14 of the hoe wheel 12 adjoin the soil, at the farthest point from the rotation axis 7 (Fig. 2). So the relative motion conditions compared to the soil are always determined by the position of the temporary (momentary) centre of the hoe wheel 12.

In a section indicated by "A" in Figure 2, the displacements of the points of the hoe wheel 12, falling within the direction of advance, are negligibly small. However, there are already considerable vertical displacements as the teeth 14 enter into and exit from the section "A". So in the section "A", the teeth 14 practically move in a vertical direction. This condition determines according to our knowledge the work of the hoe wheel 12 and the expedient design of the teeth 14 as well. The teeth 14, moving in a vertical direction, cut through the remnants of plant stems, roots, and clods, if there is sufficient resistance in the form of soil reaction force.

In a section "B" in Fig. 2, displacement of the teeth 14 in the direction of advance and in the transversal direction is increasing as a consequence of the turning of the hoe wheel 12. And this results in the fact that the tooth 14 cuts through the soil, by a movement crossing the direction of advance indicated by the arrow 8. In the meantime, the tooth 14 cuts plant roots, loosens and softens the soil, then it emerges from the soil substantially in a vertical direction, but in the meantime it leaves the remnants of plant stems covered by the soil. In the section "B", the motion of the teeth 14 is characterized by continuous acceleration during displacement from the momentary centre. The surprisingly high capacity of setf-cleaning of the hoe wheel 12 according to the invention is based on this fact.

A section "C" (see Fig. 2) is actually a "self-cleaning" zone of the teeth 14, where the teeth 14 move in the direction of advance with a double speed of advance as compared to the soil surface 9, and leave the soil vertically.

In a section "D" (Fig. 2), the teeth 14 cross the resultant direction of motion, thereby standing weeds can be broken or cut down and the soil can be levelled and mixed.

The first angle 20 of the plane of rotation 16 of the hoe wheel 12 and the soil surface 9, and the width and cross-section of the teeth 14, and the relative angular position of the hoe wheel 12 can be selected, at all times, in accordance with the agro-technical tasks to be performed by the rolling hoe 1 according to the invention.

The main advantage of the adjustable rolling hoe 1 according to the invention is that it can be applied universally to all soil surface cultivation tasks in an extremely good working quality. On the other hand, it is capable to perform several agro-technical tasks in a complex manner, within a single working round, e.g. to cut coarse clods, to level the soil, to remove weeds, and to stir in artificial fertilizer, etc. Water-saving soil cultivation can be realized by the operations performed simultaneously by the rolling hoe 1 according to the invention, which is of increasing economical importance from year to year. The invention also allows for the spreading of this relatively simple and reliable agricultural machine, that is, the rolling hoe 1, much more extensively especially in the agricultural practice than for the time being.

The rolling hoe 1 according to the invention can be operated without any clogging. It has a proper weeding capacity, an effective clodding capacity; it is suitable, even in a loose soil, to cover plant stem remnants and mix them in the soil; and also in hard soil, to cut plant stems and to adjust the state of compactness of the about 20-30 cm thick soil layer cultivated according to choice.

A further advantage of the proposed rolling hoe 1 is that it is suitable to cultivate norman, very dry and very wet soil, as well as to form ridges from small clods, as well as to loosen or to weed ridge sides, and to cultivate mainly hoed plants economically.

## Claims

1. A rolling hoe (1), mainly for soil surface cultivation works, comprising a supporting structure (2) being suspendable on a power machine, and at least one hoe body (4) hinged to the supporting structure (2); the hoe body (4) is equipped with at least one hoe wheel (12) embedded in a turnable arrangement; the hoe wheel (12) is arranged in a manner capable of being turned around an adjustment axle (18) and capable of being adjusted so that its rotation plane (16) and a soil surface (9) to be cultivated enclose a first angle (20) of 5°- 70°, while a line of intersection (17) of its rotation plane (16) with the plane of the soil surface (9) and a direction of advance (8) of the rolling hoe (1) enclose a second angle (21) of 5º 80°, furthermore, the hoe wheel (12) is equipped with a central hub (12A) and teeth (14) starting bending backwards therefrom, compared to a rotation direction (6) of the hoe wheel (12), **characterized in that** for adjustment of a cultivation depth (19) of the rolling hoe (1) without any changing of cultivation width (15), the adjustment axle (18) is arranged substantially parallel with the line of the intersection (17) of the rotation plane (16) of the hoe wheel (12) and the plane of the soil surface (9).

2. The rolling hoe according to the claim 1, **characterized in that** the adjustment axle (18) being arranged parallel with the line of intersection (17) is associated with an angle adjustment mechanism (22).

3. The rolling hoe according to the claim 2, **characterized in that** the angle adjustment mechanism (22) is provided with an adjustment hub (23) embedding rotatably the adjustment axle (18) which is fixed to a suspension arm (5) of said supporting structure (2); and the adjustment axle (18) forms a single structural unit with a house (13) embedding a central hub (12A) of the hoe wheel (12); and the angle adjustment mechanism (22) is provided with an adjustment arm (24) with openings (24A), and is fixed to the adjustment axle (18); and the angle adjustment mechanism (22) is provided with an adjustment fork (25) with openings (25A) working together with at least one of the openings (24A) of the adjustment arm (24), and said adjustment fork (25) is fixed to the suspension arm (5), wherein for locking an adjusted mutual angular position of the adjustment arm (24) and the adjustment fork (25) at least one locking element, preferably a pin (26) is led through at least one of each of the coinciding openings (24A, 25A).

4. The rolling hoe according to any of the claims 1-3, **characterized in that** the adjustment hub (23) embedding the adjustment axle (18) being parallel with the line of intersection (17) is fixed to the suspension arm (5) by welding.

5. The rolling hoe according to any of the claims 1-4, **characterized in that** one of the ends of the adjustment axle (18) being parallel with the line of intersection (17) is fixed to a house (13) embedding the central hub (12A) of the hoe wheel (12) by welding.

## Patentansprüche

1. Drehhacke (1), insbesondere zur Bearbeitung von Bodenoberflächen, umfassend ein, an einer Kraftmaschine anhängbares Tragwerk (2) und mindestens einen Hacke-Körper (4), welcher am Tragwerk (2) gelenkig gelagert und mit mindestens einem, drehbar gelagerten Hacke-Rad (12) versehen ist, wobei das Hacke-Rad (12) dazu fähig angeordnet ist, sich um eine Stellachse (18) herum gedreht zu werden, und sich so eingestellt zu werden, dass seine Rotationsebene (16) und die zu bearbeitende Bodenoberfläche (9) einen ersten Winkel (20) von 5°-70° einschliessen, und eine Schnittlinie (17) seiner Rotationsebene (16) mit der Ebene der Bodenoberfläche (9) und einer Vorschubsrichtung (8) der Drehhacke (1) einen zweiten Winkel (21) von 5°- 80° einschließen, und dass das Hacke-Rad (12) mit einer zentralen Nabe (12A) und Zähnen (14) versehen ist, welche im Vergleich zu einer Drehrichtung (6) des Hacke-Rades (12) von der Nabe (12A) nach hinten gebogen sind, **dadurch gekennzeichnet, dass** zur Einstellung einer Bearbeitungstiefe (19) der Drehhacke (1) - ohne Änderung deren Bearbeitungsbreite (15) -, die Stellachse (18) im Wesentlichen parallel zu der Schnittlinie (17) der Drehebene (16) der Hacke-Rades (12) und der Ebene der Bodenoberfläche (9) angeordnet ist.

2. Die Drehhacke nach Anspruch 1, **dadurch gekennzeichnet, dass** der, mit der Schnittlinie (17) parallelen Stellachse (18) eine Winkelstellvorrichtung (22) zugeordnet ist.

3. Die Drehhacke nach Anspruch 2, **dadurch gekennzeichnet, dass** die Winkelstellvorrichtung (22) mit einer Verstellnabe (23) versehen ist, welche die Stellachse (18) drehbar lagert und an einem Aufhängungsarm (5) des Tragwerkes (2) befestigt ist; und dass die Stellachse (18) mit einem, die zentrale Nabe (12A) des Hacke-Rades (12) lagernden Gehäuse (13) eine Baueinheit bildet, und dass die Winkelstellvorrichtung (22) mit einem Verstellarm (24) mit Öffnungen (24A) versehen und mit der Stellachse (18) befestigt ist, und dass die Winkelstellvorrichtung (22) mit einer Verstellgabel (25) mit Öffnungen (25A) in Zusammenarbeit mit mindestens einer der Öffnungen (24A) des Verstellarms (24) versehen und am Aufhängungsarm (5) fixiert ist, wobei zur Verriegelung einer eingestellten gegenseitigen Winkellage des Verstellarms (24) und der Verstellgabel (25) wenigstens ein Verriegelungselement, vorzugsweise ein Stift (26) durch mindestens eine von jedem, der übereinstimmenden Öffnungen (24A, 25A) geführt ist.

4. Die Drehhacke nach einem der Ansprüche 1- 3, **dadurch gekennzeichnet, dass** die Verstellnabe (23), welche die Stellachse (18) parallel zu der Schnittlinie (17) lagert, mit dem Aufhängungsarm (5) durch Schweißen befestigt ist .

5. Die Drehhacke nach einem der Ansprüche 1 - 4, **dadurch gekennzeichnet, dass** an einem der Enden der, parallel zu der Schnittlinie (17) liegenden Stellachse (18), ein Gehäuse (13) zum Einbetten der zentralen Nabe (12A) des Hacke-Rades (12) durch Schweißen befestigt ist.

## Revendications

1. Houe rotative (1), notamment cultivateur rotatif, spécialement pour travaux de culture de la surface du sol, comprenant une structure supportante (2) pouvant être portée par une machine motrice, et au moins un corps de houe (4) étant logé de façon articulé sur la structure supportante (2), le corps de houe (4) étant équipé d'au moins d'une roue de houe (12) logée tournant, la roue de houe (12) est arrangée pivotablement autour d'un axe d'ajustement (18) et peut être ajustée de façon que son plan de rotation (16) et la surface du sol (9) à cultiver forment un premier angle (20) de 5° à 70°, pendant que la ligne d'intersection (17) de son plan de rotation (16) et du plan de la surface du soil (9) forme avec le sens d'avancement (8) de la houe rotative (1) un second angle (21) de 5° à 80° et la roue de houe (12) est équipée d'un moyeu central (12A) et des dents (14) étant recourbés en arrière, comparé avec la direction de rotation (6) de la roue de houe (12), **caractérisée en ce que** pour l'ajustement de la profondeur du travail (19) de la houe rotative (1) sans changement de la largeur du travail (15), l'axe d'ajustement (18) est arrangé sensiblement parallèlement à la ligne d'intersection (17) du plan de rotation (16) de la roue de houe (12) et du plan de la surface du soil (9).

2. Houe rotative selon la revendication 1, **caractérisée en ce que** l'axe d'ajustement (18) arrangé parallèlement à la ligne d'intersection (17) est associé à un méchanisme d'ajustement de l'angle (22).

3. Houe rotative selon la revendication 2, **caractérisée en ce que** le méchanisme d'ajustement de l'angle (22) est pourvu d'un moyeu d'ajustement (23) logeant pivotablement l'axe d'ajustement (18) fixé à un bras de suspension (5) de la structure supportante (2), et que l'axe d'ajustement (18) forme une unité unique structurelle avec un corps (13) logeant le moyeu central (12A) de la roue de houe (12), et le méchanisme d'ajustement de l'angle (22) étant pourvu d'un bras d'ajustement (24) avec des orifices (24A) et étant fixé à l'axe d'ajustement (18), et que le méchanisme d'ajustement de l'angle (22) étant pourvu d'une fourche d'ajustement (25) avec des orifices (25A) coopérantes avec au moins une des orifices (24A) du bras d'ajustement (24), et que cette fourche d'ajustement (25) est fixée au bras de suspension (5), et pour verrouiller une position commune angulaire ajustée du bras d'ajustement (24) et de la fourche d'ajustement (25) au moins un moyen de blocage, particulièrement un boulon (26) est passé à travers au moins une des orifices (24A, 25A) coincidantes.

4. Houe rotative selon une des revendications 1 à 3, **caractérisée en ce que** le moyeu d'ajustement (23) logeant l'axe d'ajustement (18) s'allongeant parallèlement à la ligne d'intersection (17) est fixé au bras de suspension (5) par soudage.

5. Houe rotative selon une des revendications 1 à 4, **caractérisée en ce qu'**un des bouts de l'axe d'ajustement (18) s'allongeant parallèlement à la ligne d'intersection (17) est fixé par soudage au corps (13) logeant le moyeu central (12A) de la roue de houe (12).
